# FASCICULE DE BREVET EUROPEEN

(11) **EP 1 318 325 B1**
(45) Date de publication et mention de la délivrance du brevet: **06.02.2008**
(21) Numéro de dépôt: 02362022.2
(22) Date de dépôt: 09.12.2002
(51) Int. Cl.: F16F 9/34, F16F 9/516, F16F 9/58

(54) **Amortisseur hydraulique**
Hydraulischer Stossdämpfer
Hydraulic damper

(30) Priorité: 10.12.2001 FR 0115915
(43) Date de publication de la demande: 11.06.2003
(73) Titulaire: Bos S.a.r.l., 31200 Toulouse (FR)
(72) Inventeur: Bossard, Olivier, 31200 Toulouse (FR)
(74) Mandataire: Ravina, Bernard

(56) Documents cités:
- FR-A- 1 077 650
- US-A- 5 178 242

## Description

La présente invention se rapporte à un amortisseur de type hydraulique, comportant une loi d'amortissement par parties, c'est-à-dire variant en fonction de la gamme de vitesse de la tige dudit amortisseur.

De façon connue, un amortisseur comprend un corps de forme tubulaire dont les extrémités sont obturées par des parois, et dans lequel peut se translater un piston prolongé par une tige traversant l'une des parois d'extrémités, ledit piston délimitant deux chambres. En complément, des moyens sont prévus pour compenser la variation de volume de la tige.

Dans le cas d'amortisseur hydraulique, un ou plusieurs ajutages sont prévus au niveau du piston autorisant l'écoulement du fluide d'une chambre à l'autre. Ces ajutages, appelés moyens de laminage, comportent soit un empilage de clapets déformables, soit des clapets de type diaphragme ou tout autre système de laminage permettant de réaliser une résistance calibrée à l'écoulement du fluide d'une chambre à l'autre.

Les moyens de laminage peuvent être de type passif c'est-à-dire avoir une résistance à l'écoulement sensiblement constante dans le temps ou de type contrôlée c'est-à-dire avoir une résistance à l'écoulement variable en fonction du temps. Dans ce dernier cas, la loi d'amortissement d'un ou des amortisseurs est fonction du profil du terrain et/ou du style de conduite de l'utilisateur.

On connaît du brevet US 5178 242 un amortisseur conforme au préambule de la première revendication. Cet amortisseur comporte des moyens de réglage de la raideur. Ce réglage est opéré avant mise en fonction de l'amortisseur et ne peut être opéré pendant le fonctionnement dudit amortisseur.

Aussi, la présente invention vise à pallier les inconvénients des dispositifs de l'art antérieur en proposant un amortisseur hydraulique avec une loi d'amortissement par parties, permettant de définir pour chacune desdites parties un comportement différent de l'amortisseur.

A cet effet, l'invention a pour objet un amortisseur comprenant un corps obturé à chaque extrémité, dans lequel peut coulisser un piston délimitant deux chambres et prolongé par une tige, comprenant au moins deux systèmes de laminage aptes tous deux à réguler l'écoulement d'une chambre à l'autre et ce en phase de compression et/ou en phase de détente, dont au moins un a une loi d'amortissement différente de l'autre ou des autres, les lois d'amortissement ayant des seuils de déclenchement différents de manière à obtenir une loi d'amortissement par parties correspondant à des gammes de vitesse de la tige, le piston comprenant un empilage de sous-ensembles constitué, d'un premier sous-ensemble comportant le premier système de laminage sous forme d'un ou plusieurs ajutages dont une première extrémité débouche à l'intérieur de la chambre et la seconde extrémité communique avec un conduit ménagé dans la tige débouchant dans l'autre chambre, et d'un second sous-ensemble comportant le second système de laminage sous forme d'un ou plusieurs ajutages débouchant dans les deux chambres, ledit premier sous ensemble étant situé dans la chambre et ledit second sous ensemble délimitant les deux chambres se caractérise essentiellement en ce que les systèmes de laminage sont réglés de manière à obtenir, lorsque l'amortisseur fonctionne en compression, un écrêtage de l'effort à partir d'une vitesse de la tige déterminée et que le second système de laminage possède une montée en charge plus faible que le premier système.

Selon une autre caractéristique, les systèmes de laminage ont des lois d'amortissement différentes selon que l'amortisseur est en phase de compression ou de détente.

Selon un mode de réalisation, un système de laminage se présente sous la forme d'un ou plusieurs ajutages dont les formes et/ou les moyens d'obturation déterminent la loi d'amortissement. Dans ce cas, le où les ajutages d'un même système de laminage comportent chacun au moins un clapet susceptible d'occuper deux états, un premier état dans lequel il empêche l'écoulement du fluide lorsque la différence de pression entre les deux chambres est inférieure à une valeur prédéterminée correspondant à un seuil S de la vitesse de la tige, et une second état dans lequel il autorise l'écoulement du fluide d'une chambre à l'autre lorsque la différence de pression entre les deux chambres est supérieure à ladite valeur prédéterminée correspondant au seuil S.

Selon un principe de fonctionnement préféré, les systèmes de laminage sont réglés de manière à obtenir un écrêtage de l'effort à partir d'une vitesse de la tige déterminée.

D'autres caractéristiques et avantages ressortiront de la description qui va suivre du dispositif de l'invention, description donnée à titre d'exemple uniquement, en regard des dessins annexés sur lesquels:
- la figure 1 est une coupe longitudinale d'un amortisseur selon l'invention en phase de compression,
- la figure 2 est vue de détail du piston de la figure 1,
- la figure 3 est une coupe longitudinale d'un amortisseur selon l'invention en phase de détente,
- la figure 4 est un diagramme illustrant une loi d'amortissement réalisable avec l'amortisseur,
- la figure 5 est un schéma illustrant une autre variante d'amortisseur selon l'invention, et
- la figure 6 est un diagramme illustrant une loi d'amortissement de l'amortisseur de la figure 5.

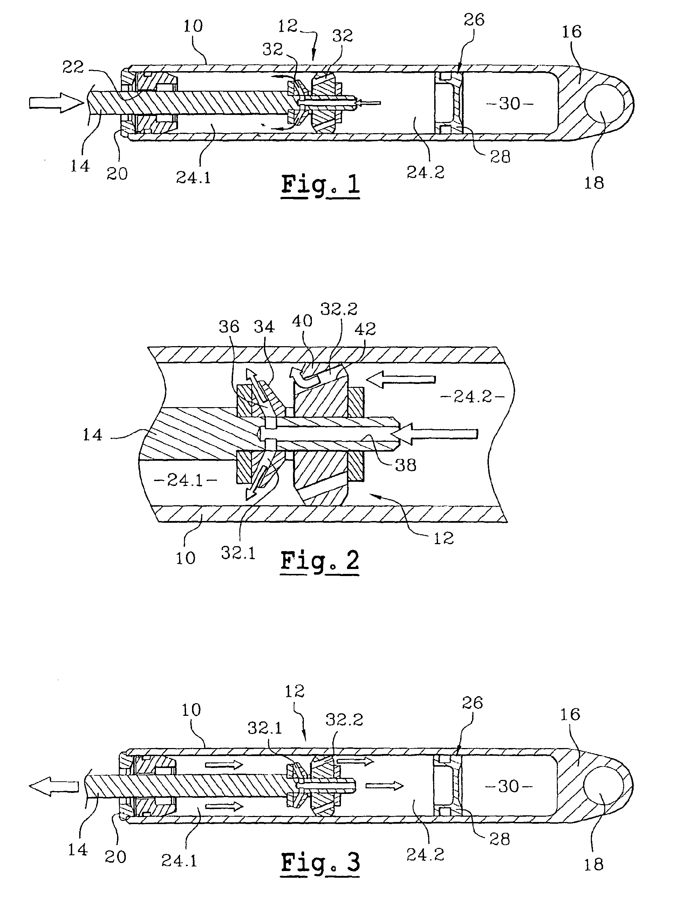

Sur la figure 1, on a représenté un amortisseur plus particulièrement adapté à une automobile. Bien entendu, l'amortisseur selon l'invention peut être adapté à tout type de véhicule (automobile, moto, vélo,...) ou tout autre dispositif. Un amortisseur de type hydraulique comprend un corps 10, sous forme d'un tube cylindrique obturé à chaque extrémité, dans lequel peut coulisser un piston 12 prolongé par une tige 14.

Comme illustré sur la figure 1, une paroi 16 servant à obturer une première extrémité est obtenue d'un seul tenant avec le corps et comprend des moyens de fixation 18, alors que l'autre extrémité est obturée par un bouchon 20 comportant un alésage 22, de préférence concentrique au corps, dans lequel coulisse la tige 14, des moyens étant prévus pour assurer l'étanchéité entre le bouchon 20 et la tige 14.

Dans le cas d'un amortisseur hydraulique, le piston 12 délimite deux chambres 24.1 et 24.2 contenant un fluide et comprend au moins un ajutage susceptible de permettre l'écoulement du fluide d'une chambre à l'autre, la loi d'amortisseur étant fonction de la résistance à l'écoulement du fluide de l'ajutage ou de manière équivalente aux pertes de charge générées par ledit ajutage.

En complément, des moyens 26 pour compenser les variations de volume de la tige à l'intérieur de la chambre 24.2 sont prévus. Selon un mode de réalisation illustré par les figures, ces moyens se présentent sous la forme d'un piston flottant 28, coulissant dans le corps 10, scindant l'une des chambres, dans notre cas la chambre 24.2, en deux compartiments, l'un d'eux 30, disposé à une extrémité, contenant un fluide compressible, avantageusement de l'air sous pression. De préférence, une valve débouchant dans le compartiment 30 permet de mettre en pression l'air afin d'éviter tout phénomène de cavitation lors du fonctionnement de l'amortisseur.

En fonctionnement, l'effort d'amortissement produit par l'amortisseur est fonction de la différence de pression ΔP entre les pressions P1 de la chambre 24.1 et P2 de la chambre 24.2, ΔP variant en fonction notamment de la vitesse de la tige.

Un système de laminage 32, régulant l'écoulement du fluide d'une chambre à l'autre, comprend un ou plusieurs ajutages présentant une loi d'amortissement déterminée, définissant l'effort d'amortissement en fonction de la vitesse de la tige.

Selon l'invention, l'amortisseur comprend au moins deux systèmes de laminage dont au moins un a une loi d'amortissement différente de l'autre ou des autres. De préférence, chacun d'eux présente une loi d'amortissement différente.

Selon une autre caractéristique, les lois d'amortissement se différencient notamment au niveau de leur seuil S de déclenchement, c'est-à-dire que pour une loi d'amortissement L donnée, l'effort d'amortissement définit par ladite loi L est sensiblement nul pour une vitesse de tige inférieure à S.

Selon un mode de réalisation préféré, le ou les ajutages d'un même système de laminage comportent chacun au moins un clapet susceptible d'occuper deux états, un premier état dans lequel il empêche l'écoulement du fluide lorsque ΔP est inférieur à une valeur prédéterminée correspondant au seuil S, et un second état dans lequel il autorise l'écoulement du fluide d'une chambre à l'autre lorsque ΔP est supérieur à ladite valeur prédéterminée correspondant au seuil S.

Ainsi, selon l'invention, chaque système de laminage a de préférence un seuil S de déclenchement différent. De la sorte, en fonction de la gamme de vitesse de la tige, les lois d'amortissement des systèmes de laminage se combinent de manière différente.

Selon une autre caractéristique, les systèmes de laminage peuvent avoir des lois d'amortissement différentes selon que l'amortisseur est en phase de compression ou de détente.

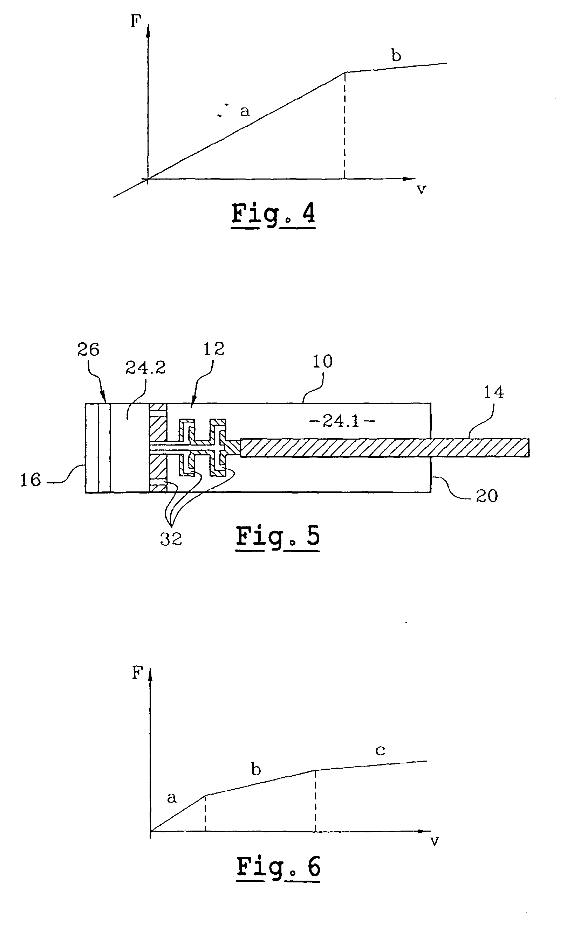

Sur les figures 1 et 2, on a représenté un amortisseur comportant deux systèmes de laminage 32.1 et 32. 2 en phase de compression. Sur la figure 1, la vitesse de la tige est supérieure au seuil S1 du premier système de laminage 32.1 et inférieure au seuil S2 du second système de laminage 32.2. Dans ce cas, on obtient une loi d'amortissement a sur la figure 4.

Sur la figure 2, la vitesse de la tige est supérieure au seuil S1 et au seuil S2. Dans ce cas, on obtient une loi d'amortissement b sur la figure 4.

Selon ce mode de fonctionnement, le second système de laminage 32.2 est suffisamment précontraint pour n'intervenir qu'à partir d'une vitesse supérieure à S2 dite vitesse d'écrêtage.

Pour provoquer l'écrêtage de l'effort, le second système de laminage 32.2 devra avoir une montée en charge plus faible que le premier système 32.1 de préférence de type iso-débits. Dans ce cas, un débit plus important dans le second système 32.2 permettra de conserver une charge quasi-constante malgré l'augmentation de vitesse et d'obtenir une portion de loi d'amortissement b sensiblement horizontale ou avec une pente sensiblement nulle.

Sur la figure 3, on a représenté un amortisseur en phase de détente. A titre d'exemple, seul le second système de laminage 32.2 autorise l'écoulement du fluide d'une chambre à l'autre, aucun écrêtage n'étant prévu en détente. Bien entendu, on peut prévoir un fonctionnement avec un écrêtage pour la phase de détente en inversant par exemple les fonctions des deux systèmes de laminage, le premier système ayant un seuil plus important que le second.

Selon un mode de réalisation illustré en détail par la figure 2, le piston 12 comprend un empilage de sous-ensembles constitué, d'un premier sous-ensemble 34 comportant le premier système de laminage 32.1 sous forme d'un ou plusieurs ajutages 36 dont une première extrémité débouche à l'intérieure de la chambre 24.1 et la seconde extrémité communique avec un conduit 38 ménagé dans la tige débouchant dans l'autre chambre 24.2, et d'un second sous-ensemble 40 comportant le second système de laminage 32.2 sous forme d'un ou plusieurs ajutages 42 débouchant dans les deux chambres 24.1 et 24.2. Les ajutages des systèmes de laminage ont des formes et/ou des moyens d'obturation, par exemple des clapets, déterminés par l'homme du métier en fonction de la loi d'amortissement que l'on souhaite obtenir.

Selon une autre caractéristique de l'invention, le second système de laminage 32.2 a de préférence une loi hydraulique de type convexe permettant de limiter les montées en charge de l'amortisseur pour les accélérations importantes de la tige 14.

L'agencement de l'invention permet de limiter les accélérations du châssis lors de chocs violents, notamment en raison d'un relief fortement accidenté, et minimise les déformations, voir les casses au niveau du châssis.

Sur la figure 5, on a représenté de manière schématique à titre d'exemple, un amortisseur comportant trois systèmes de laminage 32 chacun d'eux étant disposé au niveau d'un sous-ensemble et ayant une loi d'amortissement différente de manière à obtenir une loi d'amortissement globale pour l'amortisseur telle qu'illustrée par la figure 6, avec trois portions a, b, c correspondant à des gammes de vitesse de la tige.

Pour les sous-ensembles qui ne sont pas en contact avec l'une des chambres, un conduit est ménagé dans la tige pour chacun d'eux de manière à faire communiquer leur système de laminage avec ladite chambre.

Bien entendu, l'invention n'est évidemment pas limitée au mode décrit ci-dessus, mais en couvre au contraire toutes les variantes, notamment en ce qui concerne l'application de l'amortisseur, le nombre de système de laminage.

## Revendications

1. Amortisseur comprenant un corps (10) obturé à chaque extrémité, dans lequel peut coulisser un piston (12) délimitant deux chambres (24.1, 24.2) et prolongé par une tige (14), comprenant au moins deux systèmes de laminage (32.1, 32.2) aptes tous deux à réguler l'écoulement d'une chambre à l'autre et ce en phase de compression et/ou en phase de détente, dont au moins un a une loi d'amortissement différente de l'autre ou des autres, les lois d'amortissement ayant des seuils de déclenchement différents de manière à obtenir une loi d'amortissement par parties correspondant à des gammes de vitesse de la tige le piston (12) comprenant un empilage de sous-ensembles constitué, d'un premier sous-ensemble (34) comportant le premier système de laminage (32.1) sous forme d'un ou plusieurs ajutages (36) dont une première extrémité débouche à l'intérieur de la chambre (24.1) et la seconde extrémité communique avec un conduit (38) ménagé dans la tige débouchant dans l'autre chambre (24.2), et d'un second sous-ensemble (40) comportant le second système de laminage (32.2) sous forme d'un ou plusieurs ajutages (42) débouchant dans les deux chambres (24.1) et (24.2), ledit premier sous ensemble (34) étant situé dans la chambre (24.1) et ledit second sous ensemble (40) délimitant les deux chambres (24.1, 24.2) **caractérisé en ce que** les systèmes de laminage sont réglés de manière à obtenir, lorsque l'amortisseur fonctionne en compression, un écrêtage de l'effort à partir d'une vitesse de la tige déterminée et que le second système de laminage (32.2) possède une montée en charge plus faible que le premier système (32.1).

2. Amortisseur selon la revendication 1, **caractérisé en ce que** le second système de laminage à une loi hydraulique de type convexe.

3. Amortisseur selon l'une quelconque des revendications précédentes, **caractérisé en ce que** les systèmes de laminage ont des lois d'amortissement différentes selon que l'amortisseur est en phase de compression ou de détente.

4. Amortisseur selon l'une quelconque des revendications précédentes, **caractérisé en ce qu'**un système de laminage se présente sous la forme d'un ou plusieurs ajutages dont les formes et/ou les moyens d'obturation déterminent la loi d'amortissement.

5. Amortisseur selon la revendication 4, **caractérisé en ce que** le ou les ajutages d'un même système de laminage comportent chacun au moins un clapet susceptible d'occuper deux états, un premier état dans lequel il empêche l'écoulement du fluide lorsque la différence de pression entre les deux chambres est inférieure à une valeur prédéterminée correspondant à un seuil S de la vitesse de la tige, et une second état dans lequel il autorise l'écoulement du fluide d'une chambre à l'autre lorsque la différence de pression entre les deux chambres est supérieure à ladite valeur prédéterminée correspondant au seuil S.

## Claims

1. A damper comprising a body (10) closed off at each end, in which there can slide a piston (12) delimiting two chambers (24.1, 24.2) and extended by a rod (14), comprising at least two throttling systems (32.1, 32.2) both able to regulate the flow from one chamber to another, and this in the compression phase and/or in the expansion phase, at least one of which has a damping law different from the other or others, the damping laws having different triggering thresholds so as to obtain a damping law by parts corresponding to speed ranges of the rod, the piston (12) comprising a stack of subassemblies comprising a first subassembly (34) comprising the first throttling system (32.1) in the form of one or more nozzles (36), a first end of which opens out inside the chamber (24.1) and the second end of which communicates with a conduit (38) formed in the rod opening out in the other chamber (24.2), and a second subassembly (40) comprising the second throttling system (32.2) in the form of one or more nozzles (42) opening out in the two chambers (24.1) and (24.2), said first subassembly (34) being situated in the chamber, (24.1) and said second subassembly (40) delimiting the two chambers (24.1, 24.2), **characterised in that** the throttling systems are adjusted so as to obtain, when the damper functions in compression, a levelling of the force as from a given speed of the rod and **in that** the second throttling system (32.2) has a lower pressure rise than the first system (32.1) .

2. A damper according to claim 1, **characterised in that** the second throttling system has a hydraulic law of the convex type.

3. A damper according to any one of the preceding claims, **characterised in that** the throttling systems have different damping laws depending on whether the damper is in the compression or expansion phase.

4. A damper according to any one of the preceding claims, **characterised in that** a throttling system is in the form of one or more nozzles, the shapes and/or obturation means of which determine the damping law.

5. A damper according to claim 4, **characterised in that** the nozzle or nozzles of one and the same throttling system each comprise at least one valve able to occupy two states, a first state in which it prevents the flow of the fluid when the difference in pressure between the two chambers is below a predetermined value corresponding to a threshold S of the speed of the rod, and a second state in which it allows the fluid to flow from one chamber to another when the difference in pressure between the two chambers is greater than said predetermined value corresponding to the threshold S.

## Patentansprüche

1. Stoßdämpfer mit einem an jedem Ende verschlossenen Körper (10), in dem ein Kolben (12) verschiebbar ist, der zwei Kammern (24.1, 24.2) abgrenzt und durch eine Stange (14) verlängert ist, mit mindestens zwei Durchflußregelsystemen (32.1, 32.2), die alle zwei eingerichtet sind zum Regeln der Strömung von einer Kammer zur anderen und zwar in der Kompressionsphase und/oder der Entspannungsphase, von denen mindestens eines ein von dem oder den anderen verschiedenes Dämpfungsgesetz hat, wobei die Dämpfungsgesetze verschiedene Auslöseschwellen haben, um ein Dämpfungsgesetz mit Abschnitten, die den Geschwindigkeitsbereichen der Stange entsprechen, zu erhalten, wobei der Kolben (12) einen Stapel von Untereinheiten aufweist, der aus einer ersten Untereinheit (34) mit dem ersten Durchflußregelsystem (32.1) in Form einer oder mehrerer Düsen (36), von denen ein erstes Ende im Inneren der Kammer (24.1) mündet und das zweite Ende mit einer in der Stange ausgebildeten, in der anderen Kammer (24.2) mündenden Leitung (38) in Verbindung steht, und einer zweiten Untereinheit (40) mit dem zweiten Durchflußregelsystem (32.2) in Form einer oder mehrerer Düsen (42), die in den zwei Kammern (24.1) und (24.2) münden, besteht, wobei die erste Untereinheit (34) in der Kammer (24.1) angeordnet ist und die zweite Untereinheit (40) die zwei Kammern (24.1, 24.2) begrenzt, **dadurch gekennzeichnet, daß** die Durchflußregelsysteme so geregelt sind, daß, wenn der Stoßdämpfer in Kompression arbeitet, eine Kraftbegrenzung ab einer bestimmten Geschwindigkeit der Stange erhalten wird und das zweite Durchflußregelsystem (32.2) einen geringeren Druckanstieg als das erste System (32.1) aufweist.

2. Stoßdämpfer nach Anspruch 1, **dadurch gekennzeichnet, daß** das zweite Durchflußregelsystem ein hydraulisches Gesetz vom konvexen Typ hat.

3. Stoßdämpfer nach einem der vorangehenden Ansprüche, **dadurch gekennzeichnet, daß** die Durchflußregelsysteme verschiedene Dämpfungsgesetze haben, je nach dem, ob der Stoßdämpfer in der Kompressionsphase oder der Entspannungsphase ist.

4. Stoßdämpfer nach einem der vorangehenden Ansprüche, **dadurch gekennzeichnet, daß** ein Durchflußregelsystem in Form eines oder mehrerer Düsen vorhanden ist, deren Formen und/oder Verschlußvorrichtungen das Dämpfungsgesetz bestimmen.

5. Stoßdämpfer nach Anspruch 4, **dadurch gekennzeichnet, daß** die Düse oder Düsen ein und desselben Durchflußregelsystems jede mindestens ein Ventil aufweisen, das zwei Zustände einnehmen kann, einen ersten Zustand, in welchem es das Strömen des Fluids verhindert, wenn die Druckdifferenz zwischen den zwei Kammern kleiner als ein vorbestimmter Wert ist, der einer Schwelle S der Geschwindigkeit der Stange entspricht, und einen zweiten Zustand, in dem es das Strömen des Fluids von einer Kammer zur anderen zuläßt, wenn der Druckunterschied zwischen den zwei Kammern größer als der der Schwelle S entsprechende vorbestimmte Wert ist.
